# EUROPÄISCHE PATENTSCHRIFT

(11) **EP 3 663 221 B1**
(45) Veröffentlichungstag und Bekanntmachung des Hinweises auf die Patenterteilung: **25.08.2021**
(21) Anmeldenummer: 18210749.0
(22) Anmeldetag: 06.12.2018
(51) Int. Cl.: B65D 21/02, B65D 25/54, B65D 81/26, B65G 1/00

(54) **TRANSPORTBEHÄLTER MIT VERSETZTEN SEITENWANDSCHLITZEN UND SYSTEM**
TRANSPORT CONTAINER WITH OFFSET SIDE WALL SLOTS AND SYSTEM
RÉCIPIENT DE TRANSPORT DOTÉ DE FENTES DE PAROI LATÉRALE DÉCALÉES ET SYSTÈME

(43) Veröffentlichungstag der Anmeldung: 10.06.2020
(73) Patentinhaber: Schoeller Allibert GmbH, 19057 Schwerin (DE)
(72) Erfinder: HUIZINGH, John, 9541 AH Vlagtwedde (NL)
(74) Vertreter: Winter, Brandl - Partnerschaft mbB

(56) Entgegenhaltungen:
- WO-A1-2017/177347
- DE-A1- 2 139 194
- DE-A1- 3 411 540
- DE-A1- 3 521 894
- DE-A1- 4 228 204
- DE-U1-202007 009 366
- US-A1- 2013 026 057

## Beschreibung

### Technisches Gebiet

Die vorliegende Erfindung bezieht sich auf einen Transportbehälter gemäß dem Oberbegriff des Anspruchs 1. Weiterhin bezieht sich die Erfindung auf ein System nach Anspruch 6.

### Stand der Technik

In Postverteilzentren, Zustellservicebetrieben, Versandhäusern oder anderen Warenumschlags- oder Logistikzentren werden Güter oder Waren meist mittels Transport- und Verteilersystemen transportiert. Dabei werden die Güter und Waren unter anderem in Transportbehältern transportiert. Dabei kann es erforderlich sein, den Füllstand eines derartigen Transportbehälters zu messen, beispielsweise mithilfe eines Ultraschall-Entfernungsmessgerätes oder über eine optische Kennung, bspw. mithilfe einer Laser-Vorrichtung. Beim Einsatz von Laser-Vorrichtungen können korrekte Messungen bei hohen Fördergeschwindigkeiten im Transport- und Verteilersystem durchgeführt werden. Weiterhin kann ein Laser gleichzeitig auf den Transportbehälter aufgebrachte Bar-Codes oder QR-Codes auslesen, die beispielsweise weitere Informationen über das Transportgut enthalten.

Es ist bereits aus DE 34 11 540 A1 ein Verfahren und eine Vorrichtung zur Ermittlung eines Fördergutmengenstroms von Schüttgütern bekannt, die auf Transportbändern bzw. Bandförderern transportiert werden. Dabei strahlt ein Laser von oben auf das Transportgut und wird reflektiert. Je nachdem wie viel Schüttgut sich zum Messzeitpunkt auf dem Transportband befindet, wird der Laser unterschiedlich reflektiert und das reflektierte Signal enthält somit eine Information, aus der der Füllquerschnitt des Transportgutes bestimmt werden kann.

Es ist außerdem aus DE 21 39 194 A1 ein Transportbehälter bekannt, der insbesondere zum Transport von Fisch geeignet ist und dessen gegenüberliegende Längswände zueinander versetzt angeordnete Schlitzöffnungen aufweisen.

Weiterhin ist in DE 42 28 204 A1 ein mit einem Boden und mit zwei jeweils gegenüberliegenden Seitenwandpaaren versehener Behälter beschrieben. In beiden Seitenwandpaaren ist jeweils eine Ausnehmung vorgesehen, die vom Behälterboden bis in den Bereich der Oberkante der entsprechenden Seitenwand ragt, wobei die Ausnehmung der Seitenwände jeweils zur Ausnehmung der gegenüberliegenden Seitenwand versetzt ist.

Außerdem ist in US 2013/026057 A1 ein stapelbarer Behälter offenbart, der an zumindest einer Stirnwand eine Öffnung zum Greifen des Behälters aufweist und neben der Öffnung ein Label bzw. einen Code aufweist. Weiterhin zeigt US 2013/026057 A1 ein System zum automatischen Stapeln und Entstapeln mehrerer Behälter mit einem Greifer sowie eine Scanvorrichtung zum Lesen des Codes.

Darüber hinaus ist aus WO 2017/177347 A1 ein Behälter bekannt, dessen zwei gegenüberliegende kurze Seitenwände mit einem Code versehen sind. Neben dem Code ist jeweils eine Vielzahl von Öffnungen vorgesehen. Die mit dem Code versehenen Seitenwände sind zueinander achsensymmetrisch aufgebaut und identisch zueinander. Damit fluchten die Öffnungen der beiden gegenüberliegenden Seitenwände miteinander.

Es ist daher eine Vorrichtung zur Ermittlung einer geförderten Schüttgutmenge bekannt, die direkt auf einem Förderband aufliegt. Allerdings kann es erforderlich sein, Transportgut/Ladegut, wie beispielsweise Pakete oder Briefe, in Transportbehältern zu fördern, deren obere Öffnung durch einen Deckel verschlossen sein kann. In diesem Fall ist eine Füllstandsmessung des Transportbehälters von oben nicht mehr möglich.

### Offenbarung der Erfindung

Es ist daher eine Aufgabe der Erfindung, die Nachteile aus dem Stand der Technik zu unterdrücken oder zu minimieren und insbesondere einen in einem Transport- und Verteilersystem förderbaren Transportbehälter so zu gestalten, dass eine Füllstandsmessung des Transportbehälters mittels optischer Kennung möglich ist und gleichzeitig Fehler beim Lesen eines auf den Transportbehälter aufgebrachten Bar-Codes und/oder QR-Codes vermieden werden.

Diese Aufgabe wird hinsichtlich des Transportbehälters durch Merkmale des Anspruchs 1 und durch ein System nach Anspruch 6 gelöst.

Vorteilhafte Weiterbildungen sind Gegenstand der Unteransprüche.

Ein erfindungsgemäßer Transportbehälter eignet sich zur Aufnahme von Gütern, wie Brief- oder Paketsendungen, um diese Güter im Rahmen eines Transport- oder Verteilersystems mittels Förderbändern und / oder Rollenförderer transportieren zu können. Der Transportbehälter weist einen rechteckigen Boden auf. Dabei befindet sich an zwei gegenüberliegenden Seitenwänden jeweils ein vorbestimmter Code-Abschnitt. Auf zumindest einem Code-Abschnitt von zumindest einer der gegenüberliegenden Seitenwände ist ein maschinenlesbarer Code, insbesondere ein Barcode oder ein QR-Code, angebracht. Außerdem sind in den beiden gegenüberliegenden Seitenwänden Öffnungen in Form einer Vielzahl an vom Boden bis zur Seitenwandoberkante reichenden Schlitzen, vorgesehen. Erfindungsgemäß sind die Schlitze der beiden gegenüberliegenden Seitenwände so ausgeführt, dass sie sich auf einer gleichen Höhe wie die vorbestimmten Code-Abschnitte befinden, und versetzt zueinander angeordnet sind. Somit liegt jedem Schlitz einer der zwei gegenüberliegenden Seitenwände ein Seitenwandabschnitt der anderen der zwei gegenüberliegenden Seitenwände gegenüber.

Dabei sind die Öffnungen/Schlitze dazu vorgesehen, zu verhindern, dass Lesefehler beim Auslesen des Barcodes/QR-Codes an der Behälteraußenseite durch eine unerwünschte Reflexion eines Lichtstrahls auftreten. Der Lichtstrahl wird zumeist von einer Scanvorrichtung oder Laservorrichtung ausgesendet, die zur Aufgabe hat, den Füllstand des Behälters zu messen und gleichzeitig den Bar-Code bzw. QR-Code auszulesen.

Vorteilhafterweise ist der Transportbehälter so ausgeführt, dass die Code-Abschnitte der beiden gegenüberliegenden Seitenwände zueinander versetzt sind. Bei einem leeren Behälter trifft der Laserstrahl durch den Schlitz an einer Seitenwand in den Behälter ein und trifft schließlich auf der Innenseite eines gegenüberliegenden Code-Abschnittes auf. Ist der Behälter jedoch befüllt, trifft der Laserstrahl auf dem Transportgut auf und erzeugt damit eine andere Information als bei einem leeren Behälter.

Weiterhin ist denkbar, dass die Vielzahl an Schlitzen jeweils gleichmäßig beabstandet ist und die Schlitze in der einen Seitenwand um den halben Abstand zu den Schlitzen in der anderen Seitenwand versetzt sind. Die Füllstandsmessung eines Transportbehälters mit derart zueinander versetzten Schlitzen ist besonders einfach realisierbar. Ein regelmäßiger Abstand zwischen den Schlitzen erleichtert außerdem das Auslesen der Barcodes/QR-Codes.

Darüber hinaus können die beiden gegenüberliegenden Seitenwände zueinander punktsymmetrisch ausgebildet sein, was die Herstellung eines derartigen Behälters vereinfacht.

Weiterhin ist vorstellbar, dass der Code-Abschnitt jeweils zu beiden Seiten durch einen Schlitz begrenzt ist, um sicherzustellen, dass Lesefehler so effektiv wie möglich unterdrückt werden können.

Weiterhin kann ein System aus einem Fördersystem, einem oder mehreren mittels des Fördersystems transportierten erfindungsgemäßen Transportbehältern, und einer quer zur Transportrichtung des Transportbehälters angeordneten Scanvorrichtung zum Auslesen eines an einer Seitenwand des Transportbehälters angebrachten maschinenlesbaren Codes vorgesehen sein.

Dabei ist die Scanvorrichtung so orientiert, dass ein durch die Scanvorrichtung ausgegebenes Lesesignal über einen in der Seitenwand befindlichen Schlitz entweder auf ein im Transportbehälter befindliches Ladegut oder auf einen Innenwandabschnitt der gegenüberliegenden Seitenwand des Transportbehälters trifft.

### Kurzbeschreibung der Zeichnungen

Die vorliegende Erfindung wird im Folgenden anhand einer Ausführungsform unter Bezugnahme auf die beigefügten Zeichnungen näher beschrieben. Es zeigen:
Fig. 1 eine perspektivische Darstellung des erfindungsgemäßen Transportbehälters;
Fig. 2 eine Draufsicht des Transportbehälters, wobei die Schlitze der hinteren Seitenwand in der Draufsicht schemenhaft neben den Schlitzen der vorderen Seitenwand in der Draufsicht dargestellt sind; und
Fig. 3 eine Draufsicht des Transportbehälters.

Die Figuren sind lediglich schematischer Natur und dienen nur dem Verständnis der Erfindung. Dabei werden gleichen Elementen dieselben Bezugszeichen zugewiesen. Die Ausführungsform ist nur beispielhaft und die Erfindung ist nicht darauf begrenzt.

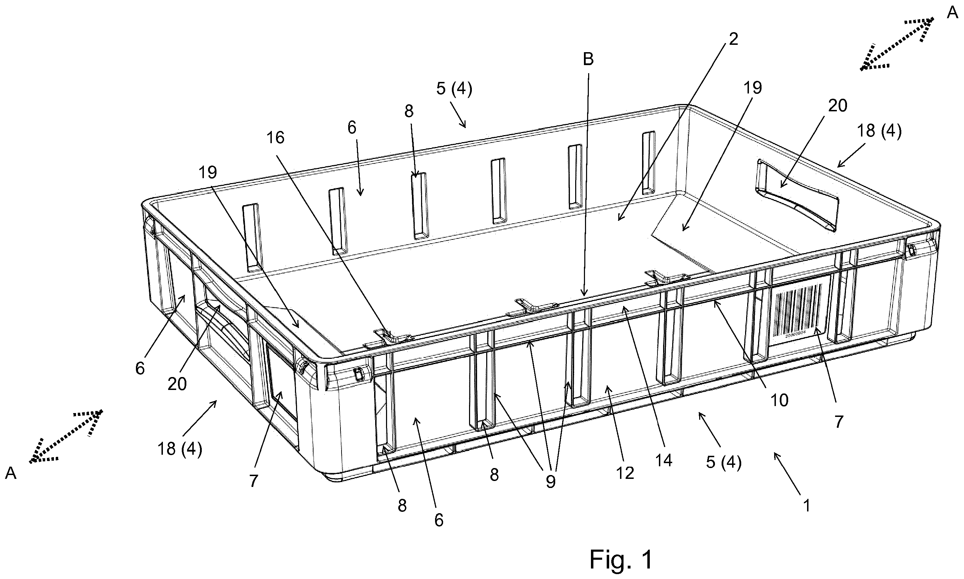

Fig. 1 zeigt den Transportbehälter/Behälter 1 in perspektivischer Darstellung. Der Behälter 1 hat einen rechteckigen Boden 2, von dem sich aus vier Seitenwände 4 senkrecht erstrecken, die eine Seitenwandung des Behälters 1 ausbilden. Die beiden einander gegenüberliegenden Längswände 5 sind in eine Vielzahl von Code-Abschnitten bzw. Seitenwandabschnitten 6 unterteilt. In diesem Fall weist jede Längswand 5 sechs Seitenwandabschnitte 6 auf. Auf jedem Seitenwandabschnitt 6 des Behälters 1 kann ein maschinenlesbarer Code 7, bspw. ein Bar-Code und/oder ein QR-Code, angebracht sein. Hier ist beispielhaft ein Bar-Code 7 an einem der Seitenwandabschnitte vorgesehen. Die Vielzahl von Seitenwandabschnitten 6 ist durch schlitzartige Öffnungen/Schlitze 8 voneinander getrennt. Dabei sind die Öffnungen 8 der einen Längswand 5 versetzt zu den Öffnungen 8 der gegenüberliegenden Längswand 5 angeordnet. Dementsprechend sind auch die Seitenwandabschnitte 6 der einen Längswand 5 zu den Seitenwandabschnitten 6 der gegenüberliegenden Längswand 5 versetzt. Die Schlitze 8 erstrecken sich zwischen Behälterboden 2 und Oberkante der Seitenwände 5, ohne mit dem Behälterboden 2 und der Oberkante der Seitenwände 5 in Kontakt zu sein. Somit hat der Behälter 1 in dieser Ausführungsform eine umlaufende Oberkante. Jeder Seitenwandabschnitt 6 ist von der Mantelfläche des Behälters 1 aus zur Behälterinnenseite hin (leicht) versetzt und mit einer in Richtung seiner Außenseite seine Seitenkanten und Oberkante verlängernden rahmenartigen Leiste 9 versehen.

Es ist zu erkennen, dass die Seitenwandabschnitte 6 jeweils durch eine Querleiste 10, die über alle Seitenwandabschnitte 6 hinweg durchgehend ausgebildet ist, zweigeteilt werden. Hier ist die Querleiste 10 so angeordnet, dass ein unterer erster Seitenwandabschnittsbereich 12 des Seitenwandabschnittes 6 größer als ein oberer zweiter Seitenwandabschnittsbereich 14 ausfällt. So kann der größere (erste) Seitenwandabschnittsbereich 12 mit einem Bar-Code 7 versehen sein (siehe Fig. 1). Der kleinere (zweite) Seitenwandabschnittsbereich 14 kann hingegen frei bleiben. Gleichzeitig sind die zweiten Seitenwandabschnittsbereiche 14 über Vertiefungen 15, die in vertikaler Richtung mit den Schlitzen 8 fluchten, voneinander separiert. Wie in Fig. 1 erkennbar, sind diese Vertiefungen 15 allerdings keine Durchgangsöffnungen zwischen Behälterinnenseite und Behälteraußenseite. Auch die Vertiefungen 15 sind seitlich durch die rahmenartige Leiste 9 begrenzt. Oberseitig werden die Vertiefungen 15 durch die Oberkante der Seitenwände 5 begrenzt.

Eine hier nicht dargestellte Scanvorrichtung ist außerhalb des Transportbehälters 1 vorgesehen, von einer Längswand 5 beabstandet und quer zu der Transportrichtung (Transportrichtung ist hier in Richtung der Längswände, siehe Pfeil A) des Behälters 1 angeordnet und sendet einen Lichtstrahl/Laserstrahl aus, welcher beispielsweise auf einen Seitenwandabschnitt 6 mit Bar-Code 7 trifft und liest diesen dann aus. In diesem Fall verhindern die neben diesem Seitenwandabschnitt 6 angeordneten Schlitze 8 einen Lesefehler beim Auslesen des Bar-Codes 7. Alternativ fällt der Lichtstrahl durch einen Schlitz 8 und misst in diesem Fall den Füllstand des Behälters 1. Falls der Behälter 1 leer ist, trifft der Strahl auf einem Seitenwandabschnitt 6 der gegenüberliegenden Längswand 5 auf. Falls der Behälter 1 befüllt ist, trifft der Strahl auf dem entsprechenden Transportgut auf, sodass der Reflexionsweg des Strahls in diesem Fall kürzer als bei einem leeren Behälter 1 ist.

Der Behälterboden 2 weist eine Vielzahl an (drei) kreuzförmigen Durchgangslöchern 16 auf. Die Durchgangslöcher 16 sind entlang der mittleren Längsachse B des Behälters 1 angeordnet, die mittig parallel zu den Längswänden 5 ist. Die kreuzförmigen Durchgangslöcher 16 tragen zu einer guten Durchlüftung des Behälters 1 bei und können auch oder alternativ als Entwässerungsöffnungen dienen, wenn der Behälter 1 beispielsweise ausgespült/gereinigt wird.

Die anderen beiden Seitenwände 4, die keine Längswände 5 sind, werden als Stirnwände 18 bezeichnet. Ausgehend von den Stirnwänden 18 erstreckt sich am Boden 2 jeweils ein von den Seitenwänden 18 zur Behältermitte hin abgeschrägter Bodenabschnitt 19. Dieser Bodenabschnitt 19 hat die Form eines symmetrischen Trapezes, dessen längere Grundseite in etwa so lang wie die Länge der Stirnwand 18 ist. Bei der Reinigung/dem Spülen des Behälters 1 mit einer Flüssigkeit kann der Bodenabschnitt 19 dazu dienen, die Flüssigkeit in Richtung der Behältermitte zu leiten, damit sie einfach über die Durchgangslöcher 16 aus dem Behälter 1 ausströmen kann. Achsensymmetrisch zur vertikalen Mittelachse der Stirnwände 18 ist jeweils ein (ergonomischer) Handgriff 20 ausgebildet, der als durchgängige Öffnung in den beiden Stirnwänden 18 ausgeführt ist. Jeweils seitlich des Handgriffs 18 ist ein weiterer Code-Abschnitt 6 angeordnet, welcher allerdings nicht von Schlitzen begrenzt wird. Hier weist einer dieser beiden Code-Abschnitte 6 in seinem ersten Seitenwandabschnittsbereich 12 einen Bar-Code 7 auf.

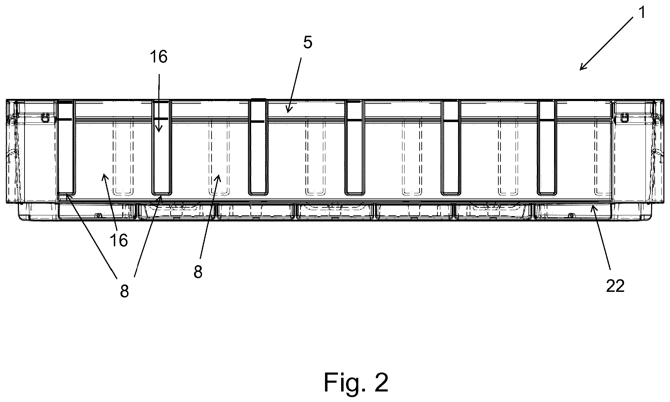

Fig. 2 zeigt den Behälter 1 in der Draufsicht. Dabei sind die Schlitze 8 der hinteren Längswand 5 jeweils als gestrichelte Linie zu erkennen, die jeweils zwischen zwei Schlitzen 8 der vorderen Längswand 5 (die der hinteren Längswand 5 gegenüberliegt) dargestellt ist. Diese Darstellung verdeutlicht, dass die Schlitze 8 der vorderen Längswand 5 zu den Schlitzen 8 der hinteren Längswand 5 versetzt sind. Daher ist bei einem leeren Behälter 1, wie er hier dargestellt ist, durch die Schlitze 8 der vorderen Längswand 5 die Innenseite der Seitenwandabschnitte 6 der hinteren Längswand 5 zu erkennen. Weiterhin ist zu erkennen, dass die Seitenwände 4 in ihrem bodennahen Bereich zurückgenommen sind und damit einen umlaufenden Stapelrand 22 ausbilden. Die Breite des Stapelrands 22 entspricht vorteilhafterweise der Breite der Seitenwände 4. In diesem Fall kann der Behälter 1 auf einen baugleichen oder kompatiblen Behälter so aufgesetzt werden, dass sein Bodenbereich in den unteren Behälter hineinragt, er mit seinem Stapelrand 22 auf den Oberkanten der Seitenwände des unteren Behälters aufliegt und die Seitenwände 4 des (oberen) Behälters 1 mit den Seitenwänden des unteren Behälters fluchten.

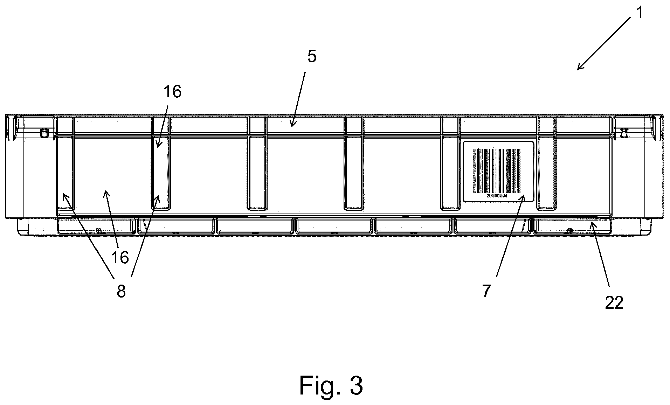

Fig. 3 zeigt den Behälter 1 in der Draufsicht ohne dabei die hintere Längswand 5 schemenhaft darzustellen. Auch hier ist zu erkennen, dass jedem Schlitz 8 der vorderen Längswand 5 ein Seitenwandabschnitt 6 der hinteren Längswand 5 gegenüberliegt. Außerdem ist der Stapelrand 22 zu erkennen.

### Liste der Bezugszeichen

- 1: Behälter
- 2: Boden
- 4: Seitenwand
- 5: Längswand
- 6: Seitenwandabschnitt/Code-Abschnitt
- 7: Bar-Code/QR-Code
- 8: Schlitz
- 9: rahmenartige Leiste
- 10: Querleiste
- 12: erster Seitenwandabschnittsbereich
- 14: zweiter Seitenwandabschnittsbereich
- 15: Vertiefung zwischen zwei zweiten Seitenwandabschnitten
- 16: kreuzförmiges Durchgangsloch
- 18: Stirnwand
- 19: abgeschrägter Bodenbereich
- 20: Handgriff
- 22: Stapelrand
- A: Transportrichtung des Behälters
- B: mittlere Längsachse des Behälters

## Patentansprüche

1. Transportbehälter (1) zur Aufnahme von Gütern, insbesondere von Brief- oder Paketsendungen, um diese Güter im Rahmen eines Transport- oder Verteilersystems mittels Förderbändern und / oder Rollenförderer transportieren zu können, mit einem rechteckigen Boden (2), von dem sich vier Seitenwände (4) erstrecken, wobei sich zumindest an zwei gegenüberliegenden Seitenwänden (4) jeweils ein vorbestimmter Code-Abschnitt (6) befindet, wobei zumindest auf einem der vorbestimmten Code-Abschnitte (6) ein maschinenlesbarer Code (7), insbesondere ein Barcode oder ein QR-Code, angebracht ist, wobei die beiden Seitenwände (4) jeweils eine Seitenwandoberkante aufweisen, und in den beiden gegenüberliegenden Seitenwänden (4) Öffnungen in Form einer Vielzahl von Schlitzen (8) vorgesehen sind, die sich vom Boden (2) bis zur jeweiligen Seitenwandoberkante erstrecken, wobei die Schlitze (8) der beiden gegenüberliegenden Seitenwände (4), sich auf einer gleichen Höhe wie die vorbestimmten Code-Abschnitte (6) befinden, **dadurch gekennzeichnet dass**, die Schlitze (8) zueinander versetzt angeordnet sind, sodass jedem Schlitz (8) einer der zwei gegenüberliegenden Seitenwände (4) ein Seitenwandabschnitt der anderen der zwei gegenüberliegenden Seitenwände (4) gegenüberliegt.

2. Transportbehälter (1) nach Anspruch 1, **dadurch gekennzeichnet, dass** die Code-Abschnitte (6) der beiden gegenüberliegenden Seitenwände (4) zueinander versetzt sind.

3. Transportbehälter (1) nach einem der vorhergehenden Ansprüche, **dadurch gekennzeichnet, dass** die Vielzahl an Schlitzen (8) jeweils gleichmäßig beabstandet sind und die Schlitze (8) in der einen Seitenwand (4) um den halben Abstand zu den Schlitzen (8) in der anderen Seitenwand (4) versetzt sind.

4. Transportbehälter (1) nach einem der vorhergehenden Ansprüche, **dadurch gekennzeichnet, dass** die beiden gegenüberliegenden Seitenwände (4) zueinander punktsymmetrisch ausgebildet sind.

5. Transportbehälter (2) nach einem der vorhergehenden Ansprüche, **dadurch gekennzeichnet, dass** der Code-Abschnitt (6) jeweils zu beiden Seiten durch einen Schlitz (8) begrenzt ist.

6. System aus einem Fördersystem, einem oder mehreren mittels des Fördersystems transportierten Transportbehältern (1) nach einem der vorhergehenden Ansprüche und einer quer zur Transportrichtung des Transportbehälters (1) angeordneten Scanvorrichtung zum Auslesen eines an einer Seitenwand (4) des Transportbehälters (1) angebrachten maschinenlesbaren Codes (7), die mit dem Code (7) versehene Seitenwand (4) und die gegenüberliegende Seitenwand (4) des Transportbehälters (1) keine miteinander fluchtenden Öffnungen (8) aufweisen und die Scanvorrichtung so orientiert ist, dass ein durch die Scanvorrichtung ausgegebenes Lesesignal über einen in der Seitenwand (4) befindlichen Schlitz (8) entweder auf ein im Transportbehälter (1) befindliches Ladegut oder auf einen Innenwandabschnitt der gegenüberliegenden Seitenwand (4) des Transportbehälters (1) trifft.

## Claims

1. A transport container (1) for receiving goods, in particular letters or packages, in order to be able to transport these goods within the scope of a transport or distribution system via conveyor belts and/or roller conveyors, comprising a rectangular bottom (2) from which four sidewalls (4) extend, wherein
a respective predetermined code section (6), is provided at least on two opposite sidewalls (4), wherein a machine-readable code (7), in particular a barcode or a QR code, is applied to at least one of the predetermined code sections (6), wherein the two sidewalls (4) each have an upper edge of the sidewalls, and
openings in the form of a plurality of slots (8) are provided in the two opposite sidewalls (4) and extend from the bottom (2) to the respective upper edge of the sidewall, wherein
the slots (8) of the two opposite sidewalls (4) are located at the same height as the predetermined code sections (6),
**characterized in that** the slots (8) are arranged offset from each other, so that each slot (8) of one of the opposite sidewalls (4) lies opposite of a sidewall portion of the other one of the two opposite sidewalls (4).

2. The transport container (1) according to claim 1, **characterized in that** the code sections (6) of the two opposite sidewalls (4) are offset from each other.

3. The transport container (1) according to one of the preceding claims, **characterized in that** the plurality of slots (8) are each evenly spaced and the slots (8) in one sidewall (4) are offset by half the distance from the slots (8) in the other sidewall (4).

4. The transport container (1) according to one of the preceding claims, **characterized in that** the two opposite sidewalls (4) are point-symmetrical with respect to each other.

5. The transport container (1) according to one of the preceding claims, **characterized in that** the code section (6) is limited on both sides by a slot (8).

6. A system comprising a conveyor system, one or more transport containers (1) according to one of the preceding claims transported via the conveyor system and a scanning device arranged transversely to the transport direction of the transport container (1) for reading a machine-readable code (7) applied to a sidewall (4) of the transport container (1),
**characterized in that**
the sidewall (4) provided with the code (7) and the opposite sidewall (4) of the transport container (1) do not have openings (8) which are aligned with each other, and the scanning device is oriented in such a way that a read signal output by the scanning device hits, via a slot (8) located in the sidewall (4), either a load located in the transport container (1) or an inner wall section of the opposite sidewall (4) of the transport container (1).

## Revendications

1. Récipient de transport (1) pour la réception de marchandises, en particulier de lettres ou de colis afin de pouvoir transporter ces marchandises dans le cadre d'un système de transport ou de distribution au moyen de bandes de transport et/ou convoyeurs à rouleaux, avec un fond (2) rectangulaire, duquel s'étendent quatre parois latérales (4), dans lequel respectivement une section de code (6) prédéterminée se trouve au moins au niveau de deux parois latérales (4) opposées, dans lequel un code (7) lisible par machine, en particulier un code barre ou un code QR, est monté au moins sur une des sections de code (6) prédéterminées, dans lequel les deux parois latérales (4) présentent respectivement une arête supérieure de paroi latérale, et dans les deux parois latérales (4) opposées sont prévues des ouvertures sous la forme d'une pluralité de fentes (8), qui s'étendent du fond (2) jusqu'à l'arête supérieure de paroi latérale respective, dans lequel les fentes (8) des deux parois latérales (4) opposées se trouvent à une hauteur identique aux sections de code (6) prédéterminées, **caractérisé en ce que** les fentes (8) sont agencées en déport l'une de l'autre de sorte qu'une section de paroi latérale de l'autre des deux parois latérales (4) opposées soit opposée à chaque fente (8) d'une des deux parois latérales (4) opposées.

2. Récipient de transport (1) selon la revendication 1, **caractérisé en ce que** les sections de code (6) des deux parois latérales (4) opposées sont en déport l'une de l'autre.

3. Récipient de transport (1) selon l'une quelconque des revendications précédentes, **caractérisé en ce que** la pluralité de fentes (8) est espacée respectivement uniformément et les fentes (8) sont en déport dans l'une paroi latérale (4) de la moitié de la distance par rapport aux fentes (8) dans l'autre paroi latérale (4).

4. Récipient de transport (1) selon l'une quelconque des revendications précédentes, **caractérisé en ce que** les deux parois latérales (4) opposées sont réalisées à symétrie ponctuelle l'une par rapport à l'autre.

5. Récipient de transport (2) selon l'une quelconque des revendications précédentes, **caractérisé en ce que** la section de code (6) est délimitée respectivement des deux côtés par une fente (8).

6. Système composé d'un système de transport, d'un ou plusieurs récipients de transport (1) transportés au moyen du système de transport selon l'une quelconque des revendications précédentes et d'un dispositif de balayage agencé transversalement au sens de transport du récipient de transport (1) pour la lecture d'un code (7) lisible par machine monté au niveau d'une paroi latérale (4) du récipient de transport (1), la paroi latérale (4) pourvue du code (7) et la paroi latérale (4) opposée du récipient de transport (1) ne présentent aucune ouverture (8) s'alignant l'une sur l'autre et le dispositif de balayage est orienté de sorte qu'un signal de lecture émis par le dispositif de balayage touche par le biais d'une fente (8) se trouvant dans la paroi latérale (4) une marchandise se trouvant dans le récipient de transport (1) ou une section de paroi intérieure de la paroi latérale (4) opposée du récipient de transport (1).
